# EUROPEAN PATENT APPLICATION

(11) **EP 4 607 764 A1**
(43) Date of publication of application: **27.08.2025**
(21) Application number: 23879711.2
(22) Date of filing: 12.10.2023
(51) Int. Cl.: H02K 1/276

(54) **ROTOR FOR ROTATING ELECTRIC MACHINE**

(30) Priority: 18.10.2022 JP 2022166603
(71) Applicant: AISIN CORPORATION, Kariya-shi, Aichi 448-8650 (JP)
(72) Inventor: SAITO, Naoto, Kariya-shi, Aichi 448-8650 (JP); SHIOTSUKI, Yasunobu, Kariya-shi, Aichi 448-8650 (JP)
(74) Representative: TBK
(86) International application number: PCT/JP2023/037056
(87) International publication number: WO 2024/085068

(57) **Abstract**

A rotor for a rotary electric machine is disclosed which includes a rotor core, first permanent magnets in first magnet holes, and second permanent magnets in second magnet holes. One or more of the first magnet holes form a shape protruding radially inward on each circumferential side with respect to the d-axis. One or more of the second magnet holes form a shape protruding radially inward of the core on each circumferential side with respect to the d-axis. At least either the first magnet holes or the second magnet holes include hole portions or a hole portion extended on both circumferential sides with respect to the d-axis across the d-axis or through the d-axis forming a shape of protruding radially outward of the core when viewed in the axial direction, and include a curve in the shape of protruding radially inward of the core when viewed in the axial direction.

## Description

### TECHNICAL FIELD

The present disclosure relates to a rotor for a rotary electric machine.

### BACKGROUND ART

A two-layer arrangement structure is known in which a plurality of permanent magnets are arranged in two layers in a rotor core.

### CITATIONS LIST

### PATENT LITERATURE

Patent Literature 1: JP 2022-107370 A

### SUMMARY OF INVENTION

### TECHNICAL PROBLEMS

In some two-layer arrangement structures like this (also in some multi-layer arrangement structures with three or more layers), magnet holes are formed (or arranged) in a W shape centered on the d-axis when viewed in the axial direction, in order to cope with increased centrifugal force accompanying increased rotational speeds of rotary electric machines. However, details of this W-shaped form have room for improvement in terms of a further optimization of a magnetic path and a further reduction of centrifugal force.

Therefore, in one aspect, the present disclosure allows a further optimization of a magnetic path and a further reduction of centrifugal force in a multi-layer arrangement structure in which magnet holes form a W shape in an axial view.

### SOLUTIONS TO PROBLEMS

In one aspect, a rotor for a rotary electric machine is provided which includes
a rotor core in which first magnet holes are formed symmetrically with respect to the d-axis when viewed in an axial direction, and second magnet holes including two or more hole portions arranged successively in a circumferential direction are formed symmetrically with respect to the d-axis when viewed in the axial direction,
first permanent magnets disposed in the first magnet holes, and
second permanent magnets disposed in the second magnet holes, in which
the rotor core includes a first part located on the radially outer side of the first magnet holes and forming an outer peripheral surface of the rotor core, a second part passing between the first magnet holes and the second magnet holes, extending to the outer peripheral surface of the rotor core at both circumferential sides, and a third part passing through the radially inner side of the second magnet holes, extending to the outer peripheral surface of the rotor core at both circumferential sides,
one or more of the first magnet holes form a shape protruding radially inward of the rotor core on each circumferential side with respect to the d-axis,
one or more of the second magnet holes form a shape protruding radially inward of the rotor core on each circumferential side with respect to the d-axis, and
at least either the first magnet holes or the second magnet holes include hole portions or a hole portion extended on both circumferential sides with respect to the d-axis across the d-axis or through the d-axis, forming a shape of protruding radially outward of the rotor core when viewed in the axial direction, and include a curve in the shape of protruding radially inward of the rotor core when viewed in the axial direction.

### ADVANTAGEOUS EFFECTS OF INVENTION

In one aspect, the present disclosure allows a further optimization of a magnetic path and a further reduction of centrifugal force in a multi-layer arrangement structure in which magnet holes form a W shape in an axial view.

### BRIEF DESCRIPTION OF DRAWINGS

FIG. 1 is a cross-sectional view schematically illustrating a cross-sectional structure of a motor according to an embodiment.
FIG. 2 is a cross-sectional view of a rotor.
FIG. 3 is an enlarged view of a portion related to one magnetic pole illustrated in FIG. 2.
FIG. 4 is a further enlarged view of part (one circumferential side with respect to the d-axis) of FIG. 3.
FIG. 5A is a diagram illustrating a configuration of a comparative example.
FIG. 5B is a diagram illustrating a configuration of another comparative example.
FIG. 6 is a diagram for explaining some of the effects of the present embodiment in comparison with the comparative example of FIG. 5A.
FIG. 7 is a plan view illustrating part of a rotor core according to a second embodiment.
FIG. 8 is a plan view illustrating part of a rotor core according to a third embodiment.
FIG. 9 is a plan view illustrating part of a rotor core according to a fourth embodiment.
FIG. 10 is a plan view illustrating part of a rotor core according to a fifth embodiment.

### DESCRIPTION OF EMBODIMENTS

Hereinafter, embodiments will be described in detail with reference to the accompanying drawings. Note that dimensional ratios in the drawings are merely an example, and the present invention is not limited to this. Shapes etc. in the drawings are sometimes partly exaggerated for convenience of description.

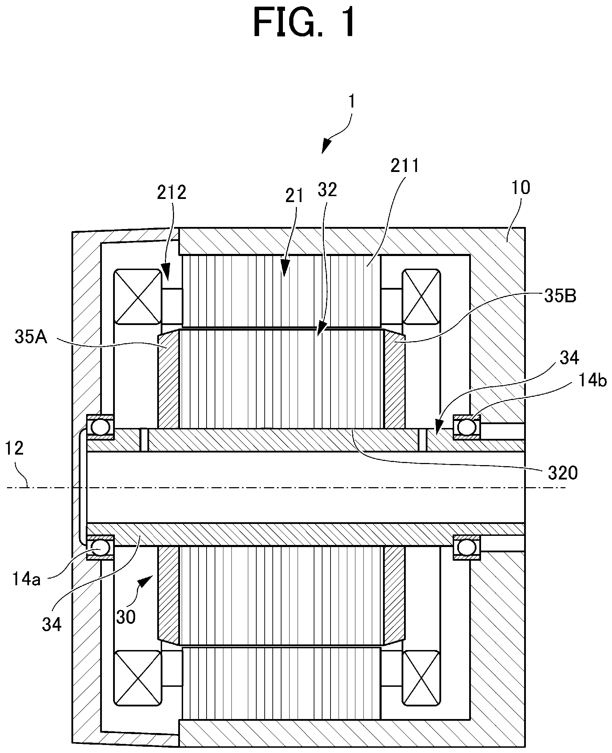

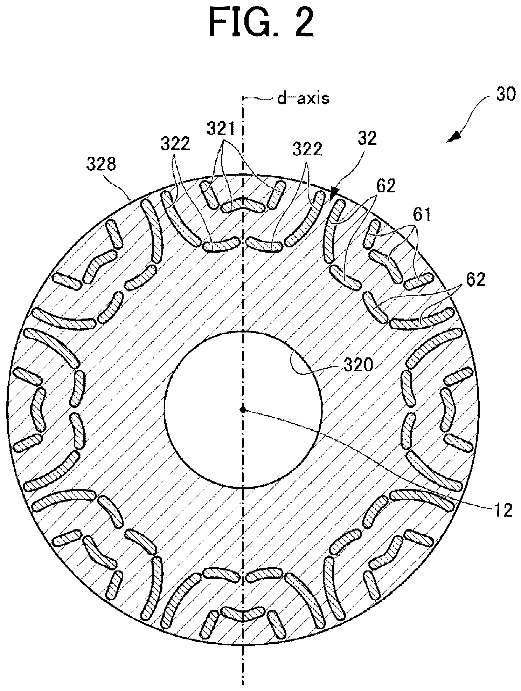

FIG. 1 is a cross-sectional view schematically illustrating a cross-sectional structure of a motor 1 according to an embodiment. FIG. 2 is a cross-sectional view of a rotor 30 (a cross-sectional view taken along a plane perpendicular to the axial direction). Note that in FIG. 2 and others, for ease of viewing, some reference numerals are each given only to one or some of a plurality of parts of the same attribute.

FIG. 1 illustrates the rotation axis 12 of the motor 1. In the following description, an axial direction refers to a direction in which the rotation axis (rotation center) 12 of the motor 1 extends, and a radial direction refers to a radial direction about the rotation axis 12. Therefore, the radially outer side refers to the side away from the rotation axis 12, and the radially inner side refers to the side toward the rotation axis 12. A circumferential direction corresponds to a rotation direction around the rotation axis 12.

The motor 1 may be, for example, a vehicle drive motor to be used in a hybrid vehicle or an electric vehicle. However, the motor 1 may be used for any other application.

The motor 1 is of an inner rotor type in which a stator 21 is provided around the radially outer side of the rotor 30. The stator 21 is fixed to a motor housing 10 on its radially outer side. The stator 21 includes a stator core 211 made, for example, from a stack of annular magnetic steel sheets. A plurality of slots (not illustrated) around which coils 212 are wound are formed in the radially inner side of the stator core 211.

The rotor 30 is disposed on the radially inner side of the stator 21.

The rotor 30 includes a rotor core 32, a rotor shaft 34, end plates 35A and 35B, and permanent magnets 61 and 62.

The rotor core 32 is fixed to the radially outer surface of the rotor shaft 34 and rotates together with the rotor shaft 34. The rotor core 32 has a shaft hole 320 (see FIG. 2). The rotor shaft 34 is fitted into the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor housing 10 via bearings 14a and 14b. The rotor shaft 34 defines the rotation axis 12 of the motor 1.

The rotor core 32 is formed, for example, by a stack of annular magnetic steel sheets. The permanent magnets 61 and 62 (see FIG. 2) are embedded in the rotor core 32. Specifically, the rotor core 32 has magnet holes 321 and 322 (see FIG. 2) passing therethrough in the axial direction, and the permanent magnets 61 and 62 are inserted and fixed in the magnet holes 321 and 322. In a modification, the rotor core 32 may be formed by a green compact into which magnetic powder is compressed and compacted.

The rotor core 32 has an annular shape when viewed in the axial direction. The outer peripheral surface 328 of the rotor core 32 includes a portion having a constant outer diameter. Note that, in a modification, the circular shape of the external shape of the rotor core 32 does not need to be a perfect circle, and may be, for example, a circular shape partially having a notch (such as a weld groove).

As illustrated in FIG. 2, the rotor core 32 has a rotationally symmetric form about the rotation axis 12 when viewed in the axial direction. In the example illustrated in FIG. 2, the rotor core 32 has the form in which sets of the permanent magnets 61 and 62 coincide every time the rotor core 32 rotates 45 degrees about the rotation axis 12.

The plurality of permanent magnets 61 and 62 may be sintered magnets or may be formed of a material for bonded magnets (hereinafter, also simply referred to as a "bonded magnet material") that is a mixture of a magnet powder and a bonding material. As illustrated in FIG. 2, as an example in the present embodiment, the plurality of permanent magnets 61 and 62 are arranged such that the permanent magnets 61 and 62 form pairs when viewed in the axial direction. In this case, a common magnetic pole is formed between a pair of the permanent magnets 61 and between a pair of the permanent magnets 62. Note that the plurality of permanent magnets 61 and 62 are arranged in such a manner that south poles and north poles alternately appear in the circumferential direction. In the present embodiment, the number of magnetic poles is eight, but the number of magnetic poles is arbitrary.

Although FIG. 1 illustrates the motor 1 having a specific structure, the structure of the motor 1 is not limited to this specific structure. For example, the rotor shaft 34 is hollow in FIG. 1, but may be solid.

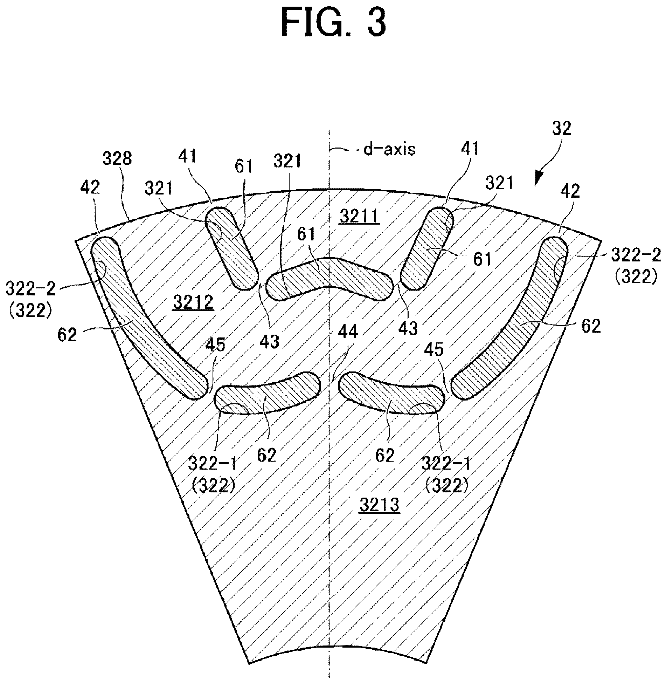

Next, with reference to FIG. 3 and subsequent drawings, the rotor core 32 and the permanent magnets 61 and 62 will be described in more detail. The following describes a configuration related to one magnetic pole. Configurations related to the other magnetic poles may be the same.

FIG. 3 is an enlarged view of a portion related to one magnetic pole illustrated in FIG. 2. The configuration related to one magnetic pole is basically symmetric with respect to the d-axis corresponding to the main flux direction (the direction of the field pole). Hereinafter, the side far from the d-axis refers to the side away from the d-axis, and the side close to the d-axis refers to the side approaching the d-axis. Both circumferential sides of the d-axis refer to both circumferential sides across the d-axis, and both circumferential sides with respect to the d-axis with the d-axis in the center. One circumferential side with respect to the d-axis refers to any one of both circumferential sides of the d-axis.

In the rotor core 32, magnet holes 321 (hereinafter, referred to as "first magnet holes 321") and magnet holes 322 (hereinafter, referred to as "second magnet holes 322") are formed. The first magnet holes 321 include two or more hole portions arranged symmetrically with respect to the d-axis when viewed in the axial direction and successively in the circumferential direction. The second magnet holes 322 include two or more hole portions arranged symmetrically with respect to the d-axis when viewed in the axial direction and successively in the circumferential direction. The first magnet holes 321 include the two or more hole portions arranged successively in the circumferential direction on the radially outer side of the second magnet holes 322 with a second part 3212 to be described below interposed therebetween. Note that "arranged successively" means a successive arrangement via various bridges to be described below.

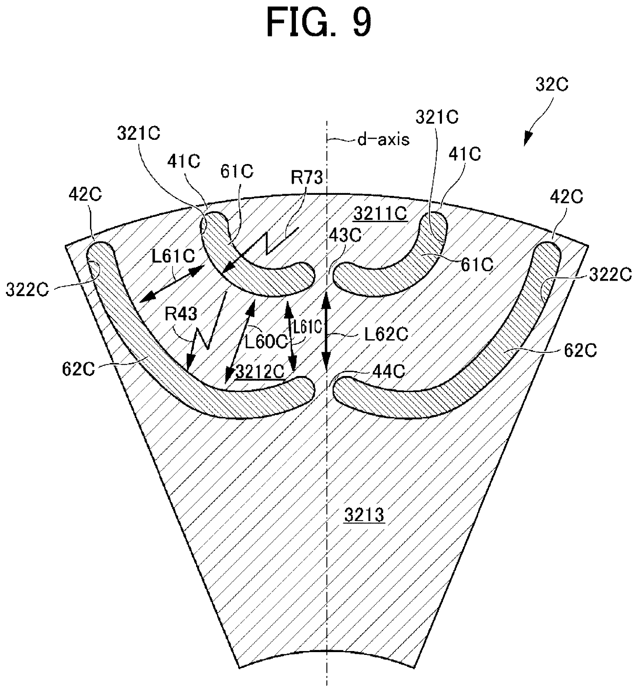

The first magnet holes 321 include a hole portion on the d-axis and two hole portions located on both circumferential sides of the d-axis in a pair. However, in a modification, the hole portion of the first magnet holes 321 on the d-axis may be divided into those on both circumferential sides of the d-axis. Alternatively, the first magnet holes 321 may only include the hole portions on both circumferential sides of the d-axis without the hole portion on the d-axis being formed (see FIG. 9). Alternatively, the first magnet holes 321 may be formed by a set of a large number of small hole portions. In this case, the form of the first magnet holes 321 corresponds to the overall form (arrangement) of the set of the large number of small hole portions. The permanent magnets 61 are provided in the hole portions of the first magnet holes 321. At this time, the permanent magnets 61 may be disposed in the first magnet holes 321 without gaps, but gaps (flux barriers) may be provided at both longitudinal ends of the permanent magnets 61 between the first magnet holes 321 and the permanent magnets 61. The gaps may be cavities or may be filled with resin or the like. Alternatively, a plurality of permanent magnets 61 may be disposed in one hole portion of each first magnet hole 321.

The second magnet holes 322 are provided on the radially inner side of the first magnet holes 321. That is, the second magnet holes 322 are provided in such a manner as to face the first magnet holes 321 from the radially inner side.

In the present embodiment, the second magnet holes 322 include a total of four hole portions formed on both circumferential sides of the d-axis in pairs. Specifically, the second magnet holes 322 include two hole portions formed on one side of the d-axis in the circumferential direction, and two hole portions formed on the other side of the d-axis in the circumferential direction. In this way, in the present embodiment, a total of four hole portions for each magnetic pole form the second magnet holes 322. However, in a modification, like the first magnet holes 321, the second magnet holes 322 may include a hole portion on the d-axis and two hole portions located on both circumferential sides of the d-axis in a pair. Alternatively, the second magnet holes 322 may be formed by a set of a larger number of small hole portions. In either case, the form of the second magnet holes 322 corresponds to the overall form (arrangement) of a set of a plurality of hole portions. The permanent magnets 62 are provided in the hole portions of the second magnet holes 322. At this time, the permanent magnets 62 may be disposed in the second magnet holes 322 without gaps, but gaps may be provided at both longitudinal ends of the permanent magnets 62 between the second magnet holes 322 and the permanent magnets 62. The gaps may be cavities or may be filled with resin or the like. Alternatively, a plurality of permanent magnets 62 may be disposed in one hole portion of each second magnet hole 322.

By including the first magnet holes 321 and the second magnet holes 322 like this, the rotor core 32 includes three parts 3211, 3212, and 3213 (hereinafter, also referred to as a first part 3211, a second part 3212, and a third part 3213) radially connected only via bridges.

Specifically, the first part 3211 extends radially outward from the first magnet holes 321. The first part 3211 forms part of the outer peripheral surface 328 of the rotor core 32.

The second part 3212 passes between the second magnet holes 322 and the first magnet holes 321, extending to the outer peripheral surface 328 of the rotor core 32 at its both circumferential sides. The second part 3212 forms part of the outer peripheral surface 328 of the rotor core 32 on both circumferential sides of the first part 3211. The second part 3212 forms the magnetic path of the q-axis flux. Specifically, the q-axis flux flows through the space between the second magnet holes 322 and the first magnet holes 321 from one end to the other end of the second part 3212.

The third part 3213 passes through the radially inner side of the second magnet holes 322, extending to the outer peripheral surface 328 of the rotor core 32 at its both circumferential sides. The third part 3213 forms part of the outer peripheral surface 328 of the rotor core 32 on both circumferential sides of the second part 3212.

In the present embodiment, the mass of the third part 3213 may be significantly greater than the mass of the second part 3212, and the mass of the second part 3212 is significantly greater than the mass of the first part 3211.

By including these three parts 3211, 3212, and 3213, the rotor core 32 includes a plurality of bridges 41, 42, 43, 44, and 45 connecting the three parts 3211, 3212, and 3213.

The bridges 41 (hereinafter, referred to as "first bridges 41") support the first part 3211 on the radially outer side against the second part 3212. That is, the first bridges 41 connect the second part 3212 and the first part 3211 and extend in the circumferential direction. The first bridges 41 are provided in a pair on both circumferential sides of the first part 3211.

The bridges 42 (hereinafter, referred to as "second bridges 42") support the second part 3212 on the radially outer side against the third part 3213. That is, the second bridges 42 connect the third part 3213 and the second part 3212 and extend in the circumferential direction. The second bridges 42 are provided in a pair on both circumferential sides of the second part 3212.

The bridge 43 supports the first part 3211 against the second part 3212 on the radially inner side of the first bridges 41. In the example illustrated in FIG. 3, the bridges 43 are arranged on both circumferential sides of the d-axis in a pair.

The bridge 44 (hereinafter, referred to as a "center bridge 44") supports the second part 3212 against the third part 3213 on the d-axis.

The bridges 45 (hereinafter, referred to as "intermediate bridges 45") support the second part 3212 against the third part 3213 on the radially outer side of the center bridge 44 and on the radially inner side of the second bridges 42.

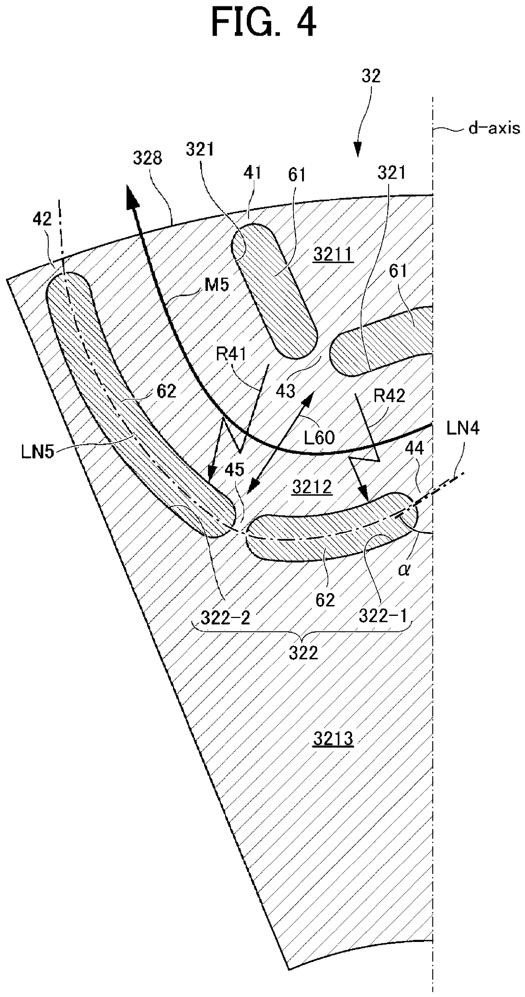

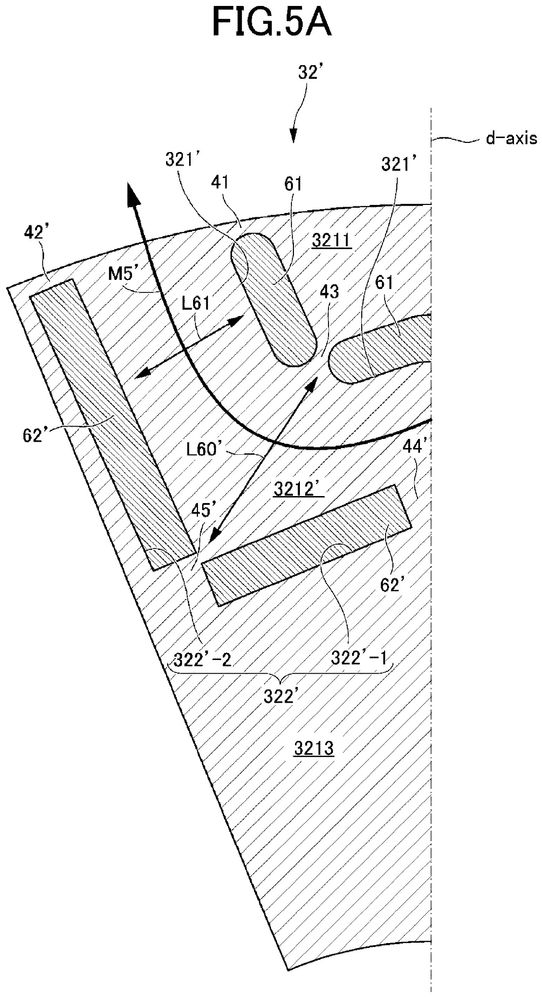

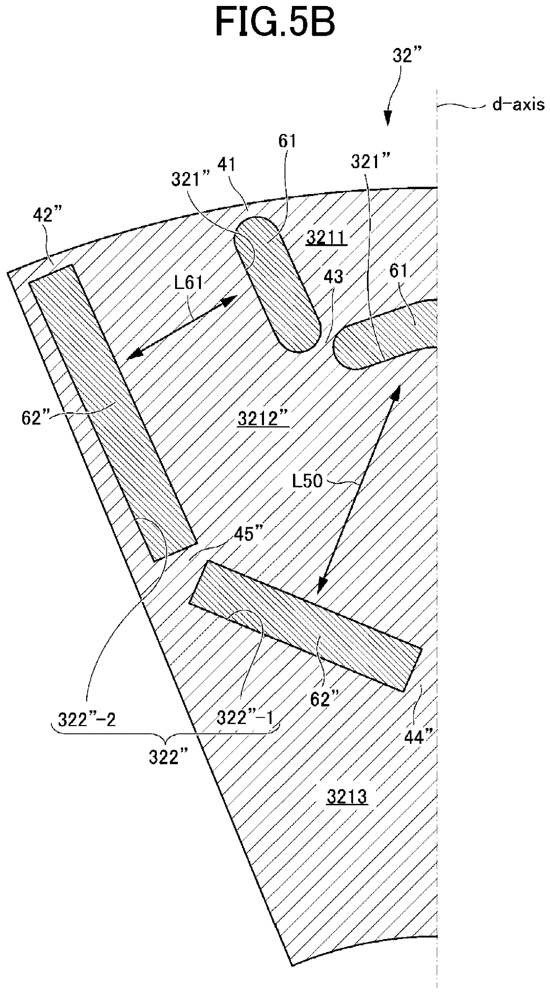

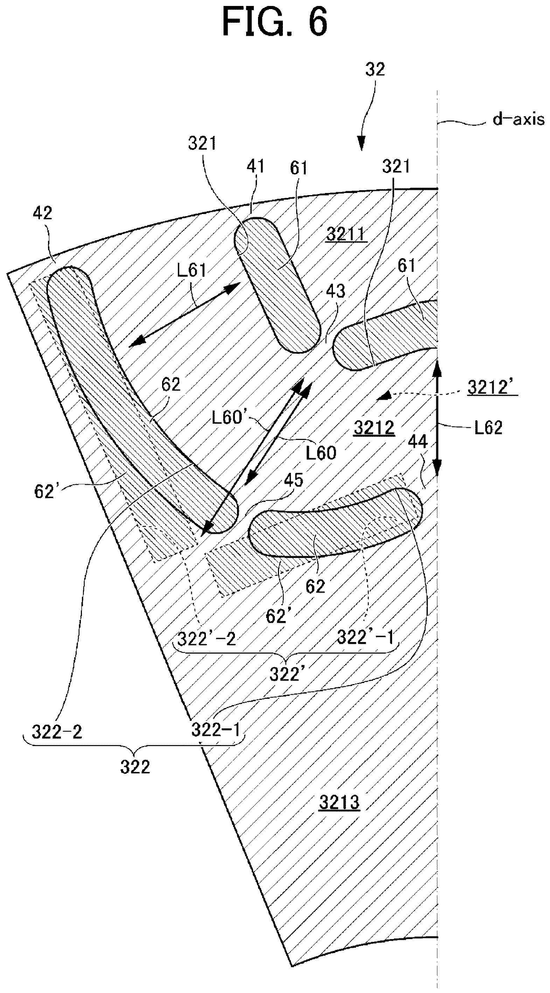

Next, with reference to FIG. 4 and subsequent drawings, further characteristic configurations of the present embodiment will be described. FIG. 4 is a further enlarged view of part (one circumferential side with respect to the d-axis) of FIG. 3, and is a diagram illustrating lines for explaining shape features. FIG. 5A is a diagram illustrating a configuration of a rotor core 32' in a comparative example. FIG. 5B is a diagram illustrating a configuration of a rotor core 32" in another comparative example. FIG. 6 is a diagram for explaining some of the effects of the present embodiment in comparison with the comparative example of FIG. 5A. In FIGS. 4 and 5A, the flows of q-axis flux are schematically indicated by arrows M5 and M5', respectively.

In the following description, various arrangements and forms represent arrangements and forms when viewed in the axial direction unless otherwise specified.

In the present embodiment, the second magnet holes 322 form a W shape centered on the d-axis. Specifically, the second magnet holes 322 include portions on the side close to the d-axis that form a radially outwardly protruding shape centered on the d-axis, and form a radially inwardly protruding shape on each circumferential side of the d-axis. In the present embodiment, the portions on the side close to the d-axis correspond to the hole portions 322-1 on both circumferential sides across the center bridge 44. On each circumferential side of the d-axis, portions forming the radially inwardly protruding shape correspond to the hole portions 322-1 and 322-2 on both circumferential sides across one of the intermediate bridges 45.

In the case where the portions of the second magnet holes 322 on the side close to the d-axis form the radially outwardly protruding shape centered on the d-axis, as illustrated in FIG. 4, the angle α formed by the shape center line LN4 of the portion on the side close to the d-axis and the d-axis is an acute angle on the radially inner side. In the case where the portion of the second magnet holes 322 on the side close to the d-axis is in an arc shape as illustrated in FIG. 4, the shape center line LN4 may be tangential at the d-axis-side end of the arc. In the case where the radially inwardly protruding shape is formed on each circumferential side of the d-axis, as illustrated in FIG. 4, the overall shape center line LN5 of the second magnet holes 322 forms a radially inwardly protruding shape on each circumferential side of the d-axis.

In the present embodiment, as illustrated in FIG. 4, this radially inwardly protruding shape has curves (see R41 and R42) each having the center of curvature on the d-axis side (radially outer side). In the case where the radially inwardly protruding shape has the curves, the overall shape center line LN5 of the second magnet holes 322 has curves each having the center of curvature on the d-axis side (radially outer side) on each circumferential side of the d-axis. In the example illustrated in FIG. 4, the second magnet holes 322 have the curves (see R41 and R42) on both sides across each intermediate bridge 45, but only one of the two may have the curve (R41 or R42). Each second magnet hole 322 does not need to have a curve in its entirety and, for example, may have a curve only at a portion close to the intermediate bridge 45. The curvature radius of each curve may be constant or may change within the curve.

Here, in the comparative example illustrated in FIG. 5A, second magnet holes 322' in which permanent magnets 62' are inserted include hole portions 322'-1 and 322'-2 forming a W shape centered on the d-axis, as in the present embodiment. However, unlike in the present embodiment, the second magnet holes 322' do not have curves in a protruding shape. That is, the second magnet holes 322' have linear shapes. In the other comparative example illustrated in FIG. 5B, second magnet holes 322" in which permanent magnets 62" are inserted include hole portions 322"-1 and 322"-2 not forming a W shape centered on the d-axis but forming a V shape centered on the d-axis.

In the case of the other comparative example illustrated in FIG. 5B, as schematically illustrated in FIG. 5B, a radially outwardly protruding shape centered on the d-axis is not included, so that a magnetic path width L50 on the side close to the d-axis is significantly larger than a magnetic path width L61 on the side far from the d-axis. In this case, the mass of a second part 3212" increases, and stress concentrations in bridges (especially bridges 42", 44", and 45" between the second part 3212" and the third part 3213) due to centrifugal force tend to be pronounced.

In this respect, the present embodiment (also the comparative example illustrated in FIG. 5A), in which the second magnet holes 322 form the W shape centered on the d-axis, thus can efficiently reduce the mass of the second part 3212 while providing the required magnetic path width L61. This can effectively reduce stresses in the bridges (especially the bridges 42, 44, and 45 between the second part 3212 and the third part 3213) due to centrifugal force.

On the other hand, in the comparative example illustrated in FIG. 5A, as illustrated in FIG. 6 by comparison, the second magnet holes 322' have the linear shapes, so that a portion significantly larger than the magnetic path width L50 (a portion with a magnetic path width L60') is produced. Specifically, in a second part 3212', the relatively large magnetic path width L60' occurs in a central portion of each side portion with respect to the d-axis (the radially inwardly protruding shape) of the W-shaped form of the second magnet holes 322'. When this relatively large magnetic path width L60' occurs, the mass of the second part 3212' increases correspondingly, and stress concentrations in the bridges (especially the bridges 42', 44', and 45' between the second part 3212' and the third part 3213) due to centrifugal force tend to be pronounced.

In contrast, the present embodiment, in which the second magnet holes 322 have the curves (see R41 and R42) as described above, thus can eliminate or reduce, as illustrated in FIG. 6, the above-described disadvantage occurring in the comparative example illustrated in FIG. 5A. Specifically, according to the present embodiment, in the second part 3212, the magnetic path width L60 occurring in the central portion of each side portion with respect to the d-axis (the radially inwardly protruding shape) of the W-shaped form of the second magnet holes 322 can be made significantly smaller than the magnetic path width L60' according to the comparative example. For example, according to the present embodiment, the magnetic path width L60 can be made substantially equal to the magnetic path width L61. As a result, the present embodiment can effectively reduce stresses in the bridges 42, 44, and 45 due to centrifugal force while providing a required magnetic path width (for example, a magnetic path width larger than or equal to the magnetic path width L61) throughout the second part 3212.

Further, the present embodiment, in which the first magnet holes 321 also have a W-shaped form, can thus effectively reduce stresses in the bridges 41 and 43 due to centrifugal force, based on the same principle. When the first magnet holes 321 have the W-shaped form, the mass of the first part 3211 can be reduced, but the mass of a part corresponding to the second part 3212 tends to be increased. For example, in the other comparative example illustrated in FIG. 5B, first magnet holes 321" have a W-shaped form, so that the width (radial width) of the second part 3212" on the d-axis increases correspondingly, and the mass of the second part 3212" tends to increase.

In contrast, the present embodiment, in which the first magnet holes 321 and the second magnet holes 322 have the W-shaped forms, thus can efficiently reduce the masses of the first part 3211 and the second part 3212.

Furthermore, in the case where the permanent magnets 61 and 62 are formed of a bonded magnet material in the present embodiment, the first magnet holes 321 and the second magnet holes 322 may be filled with the permanent magnets 61 and 62 without gaps, respectively. In this case, the amounts (volumes) of the permanent magnets 61 and 62 occupying the first magnet holes 321 and the second magnet holes 322, respectively, are maximized, so that torque characteristics of the motor 1 can be enhanced. In this configuration, the permanent magnets 61 and 62 have curved shapes corresponding to the curves of the first magnet holes 321 and the second magnet holes 322, respectively. However, in a modification, even in the case where the permanent magnets 61 and 62 are formed of a bonded magnet material, flux barriers (voids) may be set. Further, only either the permanent magnets 61 or 62 may be made of a bonded magnet material. Furthermore, only part of each permanent magnet 61 and/or only part of each permanent magnet 62 may be formed of a bonded magnet material.

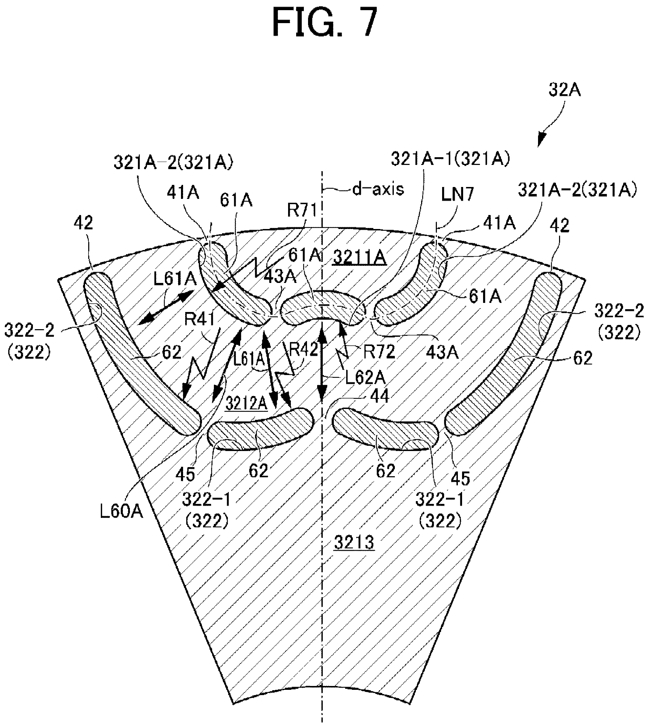

Next, with reference to FIG. 7 and subsequent drawings, some other embodiments will be described. The following refers to the embodiment described above with reference to FIGS. 2 and 3 and others as a "first embodiment", and mainly describes differences from the first embodiment. In the other embodiments below, components that may be the same as those in the first embodiment described above are denoted by the same reference numerals, and description thereof is sometimes omitted.

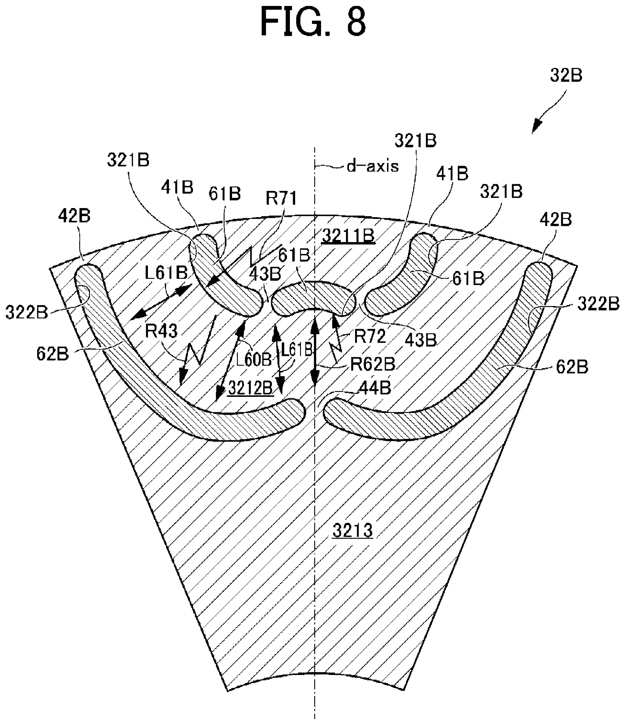

FIG. 7 is a plan view illustrating part of a rotor core 32A according to a second embodiment. The part of the rotor core 32A illustrated in FIG. 7 is the same part as the part of the rotor core 32 according to the first embodiment illustrated in FIG. 3. The same applies to FIGS. 8 to 10 to be referred to below.

The rotor core 32A according to the second embodiment is different from the rotor core 32 according to the first embodiment in that the first magnet holes 321 and the permanent magnets 61 are replaced with first magnet holes 321A and permanent magnets 61A.

The first magnet holes 321A according to the second embodiment have the following differences from the first magnet holes 321 according to the first embodiment. The first magnet holes 321A have a W-shaped form like the first magnet holes 321 according to the first embodiment. However, unlike the first magnet holes 321 according to the first embodiment, a radially inwardly protruding shape has a curve (see R71). In the example illustrated in FIG. 7, the first magnet holes 321A include a hole portion 321A-1 on the d-axis and hole portions 321A-2 separately arranged on both sides of the d-axis. Of the three portions, the hole portions 321A-2 each have the curve (see R71) having the center of curvature on the d-axis side. In this case, the overall shape center line LN7 of the first magnet holes 321A has the same curve even at a position corresponding to a bridge 43A.

In this case, the curvature radius of the curve (see R71) of each hole portion 321A-2 may be smaller than the curvature radii of the curves (see R41 and R42) of the second magnet holes 322. This allows a magnetic path width between the first magnet holes 321A and the second magnet holes 322 (that is, a magnetic path width L61A in a second part 3212A) to be made substantially constant throughout the second part 3212A.

The permanent magnets 61A according to the second embodiment may have a curved shape corresponding to the shape of the first magnet holes 321A. The permanent magnets 61A may be formed of a bonded magnet material. In the example illustrated in FIG. 7, the permanent magnets 61A are formed of a bonded magnet material and fill the first magnet holes 321A without gaps, but flux barriers (voids) may be set.

The second embodiment like this can provide the same effects as the first embodiment described above. That is, a magnetic path width L60A occurring in a central portion of each side portion with respect to the d-axis (the radially inwardly protruding shape) of the W-shaped form of the second magnet holes 322 can be made significantly smaller than the magnetic path width L60' according to the comparative example illustrated in FIG. 5A. As a result, the present embodiment can effectively reduce stresses in the bridges 42, 44, and 45 due to centrifugal force while providing a required magnetic path width (for example, a magnetic path width larger than or equal to the magnetic path width L61A) throughout the second part 3212A. Likewise, the mass of a first part 3211A can be reduced, and stresses in bridges 41A and 43A due to centrifugal force can be effectively reduced.

Further, according to the second embodiment, the hole portion 321A-1 on the d-axis of the first magnet holes 321A has a curve (see R72) having the center of curvature on the radially inner side. This allows, as compared with the case where this curve is linear, a magnetic path width on the d-axis (see a magnetic path width L62A) to be reduced while providing a required magnetic path width (for example, a magnetic path width larger than or equal to the magnetic path width L61A). This allows the mass of the second part 3212A to be reduced, and allows stresses in the bridges 42, 44, and 45 due to centrifugal force to be more effectively reduced. Note that these effects are likewise provided by the first embodiment described above.

FIG. 8 is a plan view illustrating part of a rotor core 32B according to a third embodiment.

The rotor core 32B according to the third embodiment is different from the rotor core 32 according to the first embodiment in that the first magnet holes 321 and the permanent magnets 61 are replaced with first magnet holes 321B and permanent magnets 61B. The rotor core 32B according to the third embodiment is different from the rotor core 32 according to the first embodiment in that the second magnet holes 322 and the permanent magnets 62 are replaced with second magnet holes 322B and permanent magnets 62B.

The first magnet holes 321B and the permanent magnets 61B according to the third embodiment may be the same as the first magnet holes 321A and the permanent magnets 61A according to the second embodiment described above with reference to FIG. 7.

The second magnet holes 322B according to the third embodiment have the following differences from the second magnet holes 322 according to the first embodiment. The second magnet holes 322B are different from the second magnet holes 322 according to the first embodiment in that portions corresponding to the intermediate bridges 45 are connected, and the overall form is the same. Thus, the second magnet holes 322B have the same curve (see R43).

The permanent magnets 62B according to the third embodiment may have a curved shape corresponding to the shape of the second magnet holes 322B. The permanent magnets 62B may be formed of a bonded magnet material. In the example illustrated in FIG. 8, the permanent magnets 62B are formed of a bonded magnet material and fill the second magnet holes 322B without gaps, but flux barriers (voids) may be set.

In the third embodiment, magnetic path widths L60B, L61B, and L62B can be substantially the same as the magnetic path widths L60A, L61A, and L62A according to the second embodiment illustrated in FIG. 7, respectively.

The third embodiment like this can provide the same effects as the first embodiment and the second embodiment described above. That is, the present embodiment can effectively reduce stresses in bridges 42B and 44B due to centrifugal force while providing a required magnetic path width (for example, a magnetic path width larger than or equal to the magnetic path width L61B) throughout a second part 3212B. Likewise, the mass of a first part 3211B can be reduced, and stresses in bridges 41B and 43B due to centrifugal force can be effectively reduced.

FIG. 9 is a plan view illustrating part of a rotor core 32C according to a fourth embodiment.

The rotor core 32C according to the fourth embodiment is different from the rotor core 32 according to the first embodiment in that the first magnet holes 321 and the permanent magnets 61 are replaced with first magnet holes 321C and permanent magnets 61C. The rotor core 32C according to the fourth embodiment is different from the rotor core 32 according to the first embodiment in that the second magnet holes 322 and the permanent magnets 62 are replaced with second magnet holes 322C and permanent magnets 62C.

The first magnet holes 321C according to the fourth embodiment have the following differences from the first magnet holes 321 according to the first embodiment. The first magnet holes 321C are different from the first magnet holes 321 according to the first embodiment in that the two are separately arranged on both sides of the d-axis, and the overall form is the same. Thus, the first magnet holes 321C have the same curve (see R73).

The permanent magnets 61C according to the fourth embodiment may have a curved shape corresponding to the shape of the first magnet holes 321C. The permanent magnets 61C may be formed of a bonded magnet material. In the example illustrated in FIG. 9, the permanent magnets 61C are formed of a bonded magnet material and fill the first magnet holes 321C without gaps, but flux barriers (voids) may be set.

The second magnet holes 322C according to the fourth embodiment may be the same as the second magnet holes 322B according to the third embodiment described above with reference to FIG. 8.

The permanent magnets 62C according to the fourth embodiment may have a curved shape corresponding to the shape of the second magnet holes 322C. The permanent magnets 62C may be formed of a bonded magnet material. In the example illustrated in FIG. 9, the permanent magnets 62C are formed of a bonded magnet material and fill the second magnet holes 322C without gaps, but flux barriers (voids) may be set.

In the fourth embodiment, magnetic path widths L60C, L61C, and L62C can be substantially the same as the magnetic path widths L60, L61, and L62 (see FIG. 6) according to the first embodiment described above, respectively.

The fourth embodiment like this can provide the same effects as the first embodiment and the second embodiment described above. That is, the present embodiment can effectively reduce stresses in bridges 42C and 44C due to centrifugal force while providing a required magnetic path width (for example, a magnetic path width larger than or equal to the magnetic path width L61C) throughout a second part 3212C. Likewise, the mass of a first part 3211C can be reduced, and stresses in bridges 41C and 43C due to centrifugal force can be effectively reduced.

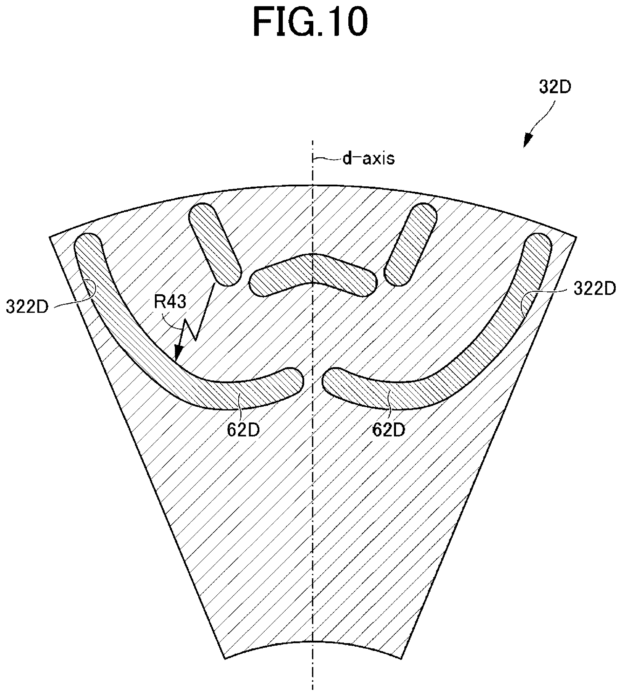

FIG. 10 is a plan view illustrating part of a rotor core 32D according to a fifth embodiment. The rotor core 32D according to the fifth embodiment is different from the rotor core 32 according to the first embodiment in that the second magnet holes 322 and the permanent magnets 62 are replaced with second magnet holes 322D and permanent magnets 62D. The second magnet holes 322D and the permanent magnets 62D are the same as the second magnet holes 322B and the permanent magnets 62B according to the third embodiment described above with reference to FIG. 8.

The fifth embodiment like this can provide the same effects as the first embodiment described above.

Although the embodiments have been described in detail above, the present invention is not limited to specific embodiments, and various modifications and changes can be made within the scope described in the claims. All or a plurality of the components of the above-described embodiments can be combined.

For example, in the first embodiment described above (also in the other embodiments), the radially inwardly protruding shape of the second magnet holes 322 has a curve, but the present invention is not limited thereto. Only the radially inwardly protruding shape of the first magnet holes 321 may have a curve. Further, in the first embodiment described above (also in the other embodiments), the first magnet holes 321 include two or more hole portions arranged symmetrically with respect to the d-axis when viewed in the axial direction and successively in the circumferential direction, but the first magnet holes 321 may be formed by a single hole portion.

### REFERENCE SIGNS LIST

30: Rotor (rotor for rotary electric machine), 32, 32A to D: Rotor core, 328: Outer peripheral surface, 3211, 3211A to C: First part, 3212, 3212A to C: Second part, 3213: Third part, 321, 321A to C: First magnet hole, 322, 322A to D: Second magnet hole, 61, 61A to C: Permanent magnet (first permanent magnet), 62, 62A to D: Permanent magnet (second permanent magnet), and R41, R42: curve

## Claims

1. A rotor for a rotary electric machine, comprising:
a rotor core in which first magnet holes are formed symmetrically with respect to a d-axis when viewed in an axial direction, and second magnet holes including two or more hole portions arranged successively in a circumferential direction are formed symmetrically with respect to the d-axis when viewed in the axial direction;
first permanent magnets disposed in the first magnet holes; and
second permanent magnets disposed in the second magnet holes, wherein
the rotor core includes a first part located on a radially outer side of the first magnet holes and forming an outer peripheral surface of the rotor core, a second part passing between the first magnet holes and the second magnet holes, extending to the outer peripheral surface of the rotor core at both circumferential sides, and a third part passing through a radially inner side of the second magnet holes, extending to the outer peripheral surface of the rotor core at both circumferential sides,
one or more of the first magnet holes form a shape protruding radially inward of the rotor core on each circumferential side with respect to the d-axis,
one or more of the second magnet holes form a shape protruding radially inward of the rotor core on each circumferential side with respect to the d-axis, and
at least either the first magnet holes or the second magnet holes include hole portions or a hole portion extended on both circumferential sides with respect to the d-axis across the d-axis or through the d-axis, forming a shape of protruding radially outward of the rotor core when viewed in the axial direction, and include a curve in the shape of protruding radially inward of the rotor core when viewed in the axial direction.

2. The rotor for a rotary electric machine according to claim 1, wherein at least either the first magnet holes or the second magnet holes include the second magnet holes, and the second permanent magnets have a curved shape corresponding to the curve.

3. The rotor for a rotary electric machine according to claim 2, wherein at least either the first magnet holes or the second magnet holes further include the first magnet holes, and the first permanent magnets have a curved shape corresponding to the curve.

4. The rotor for a rotary electric machine according to claim 3, wherein a curvature radius of the curved shape related to the second magnet holes is larger than a curvature radius of the curved shape related to the first magnet holes.

5. The rotor for a rotary electric machine according to claim 1, wherein the second permanent magnets are formed of a bonded magnet material.
